# EUROPÄISCHE PATENTANMELDUNG

(11) **EP 1 296 430 A1**
(43) Veröffentlichungstag der Anmeldung: **26.03.2003**
(21) Anmeldenummer: 02405694.7
(22) Anmeldetag: 14.08.2002
(51) Int. Cl.: H02G 3/08

(54) **Anschlussbox**

(30) Priorität: 20.09.2001 CH 17402001
(71) Anmelder: MDM Elektrosystem AG, 8620 Wetzikon (CH)
(72) Erfinder: Honegger, Kurt, 8636 Wald (CH)
(74) Vertreter: Frei, Alexandra Sarah

(57) **Zusammenfassung**

Die Erfindung betrifft eine Anschlussbox mit Steckdosen. Die erfindungsgemässe Anschlussbox weist mehrere aus Kunststoff gefertigte Einzelteile auf, die zu einem Kunststoffgehäuse zusammengesetzt werden können. Das Gehäuse beinhaltet einen Kabeleingang zum Führen von Strom und/oder Daten führenden Kabeln ins Innere der Anschlussbox. Es weist weiter von der Gehäuseaussenseite zugängliche Steckdosen auf, deren Anschlüsse mit Adern von ins Innere geführten Kabeln verbindbar sind. Das Kunststoffgehäuse beinhaltet zudem Steckdosen-Befestigungsmittel zum reversiblen Befestigen der Steckdosen.

## Beschreibung

Die Erfindung betrifft das Anschliessen von Geräten an einem Arbeitsplatz an Strom- und Datenleitungen. Im Speziellen betrifft sie eine Anschlussbox gemäss dem Oberbegriff des unabhängigen Patentanspruchs.

Aus dem Stand der Technik sind Vorrichtungen mit einer Steckdosenanordnung bekannt, welche bspw. auf einen Bürotisch gestellt werden können und daher auch Tischboxen genannt werden. Wenn ein Stromversorgungskabel der Tischbox in eine Steckdose eingesteckt ist, kann von den Steckdosen in der Tischbox Strom für die Bürogeräte abgezweigt werden.

Solche Tischboxen stellen Erweiterungen des Mehrfachstecker-Konzepts dar. Sie sind im Allgemeinen unflexibel in ihrer Gestaltung, d.h. mit einem Metallgehäuse und einer fixen Anzahl Steckdosen ausgestattet und nur für eine bestimmte Anordnung ausgelegt. Beispielsweise existieren Tischboxen zum Anbringen an einer Tischkante.

Aufgabe der Erfindung ist es, das Konzept der Tischboxen in mehrfacher Hinsicht zu erweitern und eine Tischbox zur Verfügung zu stellen, welche den dynamischen Erfordernissen moderner Büroarbeitsplätze genügt. Im Einzelnen sind das:
- Flexibilität in der Gestaltung. Die Tischbox soll sowohl Netzsteckdosen als auch Datensteckdosen in der gerade gewünschten Anzahl und Anordnung aufweisen.
- Flexibilität in der Platzierung: Die Tischbox soll je nach Erfordernissen an verschiedenen Stellen platziert werden können, bspw. auf einem Tisch, an einer Tischplattenunterseite etc..
- Flexibilität in der Montage: Die Tischbox soll ein Konzept unterstützen, welches auch von der Daten- und Stromversorgungsseite her beim ersten Einrichten eines Arbeitsplatzes grösstmögliche Flexibilität ermöglicht.
- Skalierbarkeit: Je nach Grösse oder Komplexität des Arbeitsplatzes soll die Tischbox für nur wenige oder aber auch für sehr viele Anschlüsse dienen können.
- Kostengünstigkeit.
- Zusätzlich soll ein ansprechendes Design möglich sein.

Die Aufgabe wird durch die Erfindung gelöst, wie sie in den Patentansprüchen definiert ist.

Die erfindungsgemässe Anschlussbox weist mehrere aus Kunststoff gefertigte Einzelteile auf, die zu einem Kunststoffgehäuse zusammengesetzt werden können. Das Gehäuse beinhaltet einen Kabeleingang zum Führen von Strom und/oder Daten führenden Kabeln ins Innere der Anschlussbox. Es weist weiter von der Gehäuseaussenseite zugängliche Steckdosen auf, deren Anschlüsse mit Adern von ins Innere geführten Kabeln verbindbar sind. Das Kunststoffgehäuse beinhaltet zudem Steckdosen-Befestigungsmittel zum reversiblen Befestigen der Steckdosen.

Weiter können zusätzliche Befestigungsmittel in der Form von Befestigungslöchern, Rastpartien etc. für Zusatzelemente, wie bspw. Adapter für Kabelkanäle, Zugentlastungen, elektronische Bauteile, Beschwermittel, etc. vorhanden sein.

Eine erfindungsgemässe Anschlussbox ist vorzugsweise so gestaltet, dass sie mit weiteren Anschlussboxen zu einer grösseren Einheit erweitert werden kann.

Ausserdem kann das Gehäuse so ausgestaltet und die Befestigungsmittel so angeordnet sein, dass der Kabeleingang bspw. reversibel relativ zum Gehäuse versetzt werden kann. Dies kann durch frei Halten von entsprechenden Öffnungen in der Gehäusewand und durch Versetzen von Zugsentlastungen oder Adaptern im Innern des Gehäuses geschehen. Das Versetzen des Kabeleingangs kann auch nur teilweise reversibel sein, indem eine Gehäusewand oder ein Abschnitt einer Gehäusewand herausgebrochen wird, wobei später frei liegende und nicht mehr für einen Kabeleingang verwendete Öffnungen mit einem eigens dafür vorgesehenen und entsprechend dimensionierten Deckel abgedeckt werden können.

Dadurch, dass die Steckdosen reversibel befestigt und damit auch wieder versetzt werden können, ist die Anschlussbox flexibel, was das Anbringen von verschieden Steckdosenformaten bzw. Steckbuchsenformaten angeht. Auch kann die Anschlussbox durch einfaches versetzen bzw. ersetzen von Steckdosen auch nach ihrer erstmaligen Montage den Bedürfnissen angepasst werden.

Ein weiterer Vorteil der erfindungsgmässen Anschlussbox ist das aus einem vollständig elektrisch isolierenden Material hergestellte Gehäuse. Die Anschlussbox benötigt somit keine zusätzliche Erdung und kann zudem noch sehr Kosten sparend hergestellt werden.

Dass das Gehäuse aus Kunststoff gefertigt ist, bringt aber nicht nur Kostenvorteile mit sich, sondern ermöglicht durch die erfindungsgemässe Konstruktion auch neue Freiheitsgrade bei der Gestaltung. So kann bspw. durch das reversible oder irreversible Entfernen - bspw. dem Herausbrechen - von Seitenwänden oder Teilen von Seitenwänden aus dem Gehäuse eine Verbindungsstelle zum Verbinden von Anschlussboxen zu einer grösseren Einheit geschaffen werden. Auch wird durch den Kunststoff erst ermöglicht, dass Einzelteile des Gehäuses aufeinander gesteckt anstatt aneinander geschraubt werden können. Damit kann das Gehäuse schneller in seine Einzelteile zerlegt werden.

Vorzugsweise sind die Steckdosen in einem Frontteil eingebracht, welches einen Rahmen besitzt, in welchen die Steckdosen - Einzel- oder Mehrfachsteckdosen - eingesetzt werden können. Der Rahmen ist so bemessen, dass kommerziell erhältliche und damit kostengünstige Steckdosen eingeschoben werden können und fixierbar sind. Es ist aber auch möglich, die Steckdosen mittels Einrastvorrichtungen zu befestigen.

Die Einzelteile einer Anschlussbox sind so ausgestaltet, dass sie eine einfache Montage erlauben und einen guten Zugang zu den Verdrahtungsstellen sicherstellen. Dazu weisen die aus Kunststoff gefertigten Einzelteile der erfindungsgemässen Anschlussbox Befestigungsmittel auf, vorzugsweise formschlüssige Befestigungsmittel, die ein einfaches und mehrfaches Zusammensetzen und Auseinandernehmen der Einzelteile erlauben. In einer bevorzugten Ausführungsform sind die Einzelteile zudem so ausgestaltet, dass Zusatzelemente wie Kabelkanäle oder Kabelkanaladapter an verschiedenen Stellen einer Anschlussbox angebracht werden können. Das Anbringen solcher Zusatzelemente geschieht mittels Verbinden entsprechender Befestigungsmittel, die vorzugsweise ebenfalls formschlüssige Befestigungsmittel sind.

Gemäss einer Ausführungsform können Kabel an unterschiedlichen Stellen des Kunststoffgehäuses in die Anschlussbox geführt werden. Das Kunststoffgehäuse weist dazu mehrere dafür vorgesehene Stellen auf, bspw. Abschnitte einer Wand des Gehäuses. Die Begrenzung solcher Abschnitte weist typischerweise Sollbruchstellen auf, entlang derer ein Abschnitt aus einer Wand herausgebrochen werden kann. Sollbruchstellen werden bspw. in an sich bekannter Art durch Perforationen oder durch lokale Ausdünnungen oder sonstige Materialschwächungen bewirkt. Herausbrechbare Abschnitte in einem Kunststoffgehäuse können zusätzlich noch mit Markierungen versehen sein.

Eine weitere Ausführungsform sieht vor, dass das Frontteil mit dem Rahmen auf eine Grundplatte aufsteckbar ist. Der Zugang zu den Anschlusskontakten der Steckdosen für die Verdrahtung wird dadurch erleichtert. Bereits in der Grundplatte vorhandene Befestigungsmittel für zusätzliche Elemente erlauben auch ein nachträgliches Umbauen bzw. Erweitern der Anschlussbox. Zusätzlich besitzt das Gehäuse einen abnehmbaren Deckel.

Die erfindungsgemässe Vorrichtung weist vorzugsweise zwischen dem Frontteil - so wird im Kontext dieser Beschreibung die oder eine Gehäuseseite genannt, in welcher Steckdosen angebracht sind, und der Grundplatte einen Winkel auf, der kleiner als 90° ist und vorzugsweise in einem Bereich von 50°-80° liegt, bspw. 60°-70° beträgt. Nebst der optisch ansprechenden Wirkung einer leicht nach hinten gekippten Vorderseite wird dadurch der Zugang zu den Steckdosen und somit das Ausziehen und Einstecken eines Steckers in die erfindungsgemässe Anschlussbox erleichtert. Gleichzeitig sind die Stecker in eingestecktem Zustand zurückversetzt, womit die Gefahr vermindert wird, dass beim streifenden Vorbeigehen einer Person die Anschlussbox oder der Stecker beschädigt oder der Stecker unabsichtlich herausgezogen wird. Der Winkel erleichtert auch die Handhabung der Anschlussbox, wenn sie bspw. an der Unterseite einer Tischplatte angebracht ist. Bei geeigneter Anordnung gehen eingesteckte Kabel schräg nach unten von der Box weg. Bei bestehenden Tischboxen würden eingesteckte Kabel entweder vertikal nach unten oder horizontal der Platte entlang von der Box wegstehen. Ersteres bringt die Gefahr mit sich, dass ein eingesteckter Stecker durch kleine Erschütterungen mit der Zeit gelöst wird; letzeres ist sehr unpraktisch und unübersichtlich beim Einstecken von Steckern.

Gemäss einer Ausführungsform beinhaltet die Anschlussbox mindestens eine zu einer Grundplatte im rechten Winkel angeordnete Seitenwand, so dass die Vorrichtung auf möglichst viele unterschiedliche Arten bzw. an unterschiedlichen Orten, z. B. Tischflächen oder Ecken, aufgestellt oder angebracht werden kann. Dies erlaubt besonders Platz sparende Varianten des Platzierens einer erfindungsgemässen Anschlussbox. Diese kann bspw. nicht nur auf und unter einem Tisch. angebracht, sondern auch seitlich aufgestellt werden. Die zur Grundplatte senkrechte Wand ermöglicht auch die nahtlose Aneinandersetzbarkeit von mehreren Anschlussboxen zu einer grösseren Einheit.

Die erfindungsgemässe Vorrichtung weist vorzugsweise in der Grundplatte weitere Befestigungsmittel zum Anbringen von Beschwermitteln auf. Beschwermittel sind bspw. Gewichte in Form von Platten und dienen dazu, eine Anschlussbox standsicher zu gestalten und gegen ein ungewolltes Verschieben zu sichern. Der Schwerpunkt einer Anschlussbox kann damit so gelegt werden, dass ein Umfallen der Box vermieden wird. Dies ist besonders bei seitlichem Aufstellen einer Box von Vorteil. Ein Anbringen von Beschwermitteln aussen an einer Anschlussbox erlaubt es zudem, eine vollständig elektrisch isolierte Anschlussbox herzustellen und diese mit metallischen Gewichten standsicher zu gestalten. Eine Unterseite einer Anschlussbox oder eventuelle an der Unterseite angebrachte Beschwermittel oder eine Verbindungsplatte kann zudem mit einem Unterlagenschutz oder einer Rutschsicherung versehen sein. Rutschsicherungen sind bspw. Füsse aus Materialien wie Gummi oder einem sehr weichen Kunststoff oder Füsse mit einer Saugnapf- oder sinngemässen Funktion.

Der oder die Kabelanschlüsse können von der Anschlussbox weg in einem Kabelkanal geführt sein. Ein solcher kann als flexible Hülle, als sogenannter Flexkanal ausgebildet sein, wie er bspw. im Hause der Anmelderin hergestellt wird. Er wird zusammen mit Zugentlastungen auf einem Kabelkanaladapter montiert. Dieser Adapter wird in dazu vorgesehenen Befestigungsmitteln des Kunststoffgehäuses, bspw. der Grundplatte oder einer Seitenwand, befestigt. Die Befestigung geschieht vorzugsweise mittels einfacher Befestigungsmittel, wie bspw. formschlüssigen Mitteln oder Schrauben, mit denen ein Adapter, sowie allfällige Zusatzelemente eingeklemmt oder angeschraubt werden können. Werden die Kabel nicht in einen Kabelkanal geführt, kann der Adapter auch weggelassen werden. Allfällige Zugentlastungen werden dann vorzugsweise direkt auf der Grundplatte befestigt. Die Grundplatte weist dazu entsprechende Befestigungsmittel, z. B. Aussparungen, Gewindebuchsen oder sonstige sinngemässe Vorrichtungen auf.

Die spezielle Gestaltung der erfindungsgemässen Stromverteil-Einrichtung in der Form von zu einer Anschlussbox zusammensetzbaren Einzelteilen, ermöglicht auch eine sehr einfache Art der Erweiterung einer Anschlussbox. Dies geschieht bspw. durch das Entfernen jeweils einer Seite, vorzugsweise einer Seitenwand, oder entsprechenden Abschnitten von Seiten zweier Anschlussboxen. Die beiden Boxen werden anschliessend zusammengefügt und durch Verbinden von dazu vorhandenen Verbindungsmitteln aneinander befestigt. Solche Verbindungsmittel sind vorzugsweise Platten, die Befestigungsmittel aufweisen, welche zu Befestigungsmitteln von Einzelteilen, vorzugsweise von Grundplatten korrespondieren. Bei einer zweiten und jeder weiteren Anschlussbox kann ein Kabelkanal und ein allfälliger Kabelkanaladapter weggelassen werden, so dass sämtliche Kabel durch einen einzelnen Kabelkanal an einer einzelnen Stelle der - erweiterten- Anschlussbox geführt sind. Eine bestehende Anschlussbox kann auf diese Weise im wesentlichen beliebig erweitert werden.

Durch abnehmbare und anbringbare Einzelteile wird eine schnelle, einfache und variable Montage, sowie eine komfortable Verdrahtung ermöglicht. Die Anschlussbox wird dadurch vielseitig einsetzbar und ist zudem kostengünstig herzustellen.

Im Folgenden wird die Erfindung anhand beispielhafter Ausführungsformen und Figuren beschrieben. Es zeigen
- Fig. 1: eine Innenansicht einer erfindungsgemässen Anschlussbox mit rückseitig angebrachtem Kabelkanal inkl. Verdrahtung,
- Fig. 2: eine Ausführungsform der erfindungsgemässen Anschlussbox,
- Fig. 3: eine weitere Ausführungsform der erfindungsgemässen Anschlussbox,
- Fig. 4: eine Innenansicht einer erfindungsgemässen Anschlussbox mit seitlich angebrachtem Kabelkanal ohne Verdrahtung,
- Fig. 5: Einzelteile einer erfindungsgemässen Anschlussbox,
- Fig. 6: eine erweiterte Ausführungsform der erfindungsgemässen Anschlussbox,
- Fig. 7: Anordnungsmöglichkeiten der erfindungsgemässen Anschlussbox,

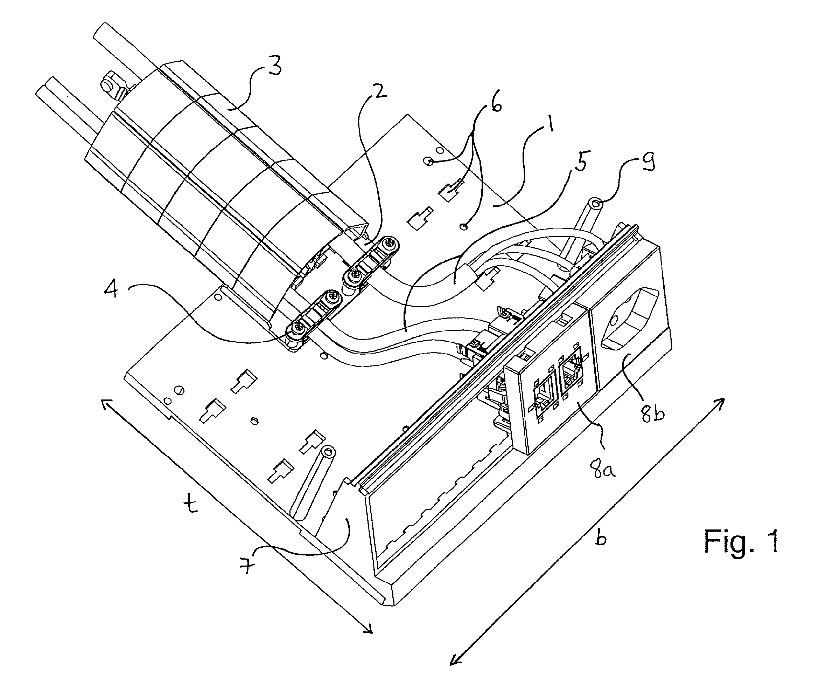

In **Figur 1** ist eine Innenansicht einer teilweise bestückten Anschlussbox gezeigt. Auf einer Grundplatte 1 befindet sich ein Adapter 2 für einen Kabelkanal und Zugentlastungen 4 für Kabel 5. Der Kabelkanal ist zum Schutz der Kabel 5 als elastischer Flexkanal 3 ausgebildet. Die Grundplatte 1 weist zur Befestigung des Adapters 2 und eventuellen weiteren Elementen, z. B. Stromfiltern oder Schaltaktoren, Befestigungsmittel 6 auf. Diese sind so gestaltet, dass ein Adapter 2 sehr einfach, hier mittels Einrasten oder Einstecken, an der Grundplatte 1 fixiert werden kann. An einer Vorderseite der Grundplatte 1 befindet sich ein Frontteil 7, in welches unterschiedliche Steckdosen 8a, 8b, hier eine für ein Strom- und zwei für Datenkabel, eingebracht sind. Das Frontteil 7, sowie die Steckdosen 8a, 8b werden vorzugsweise mittels formschlüssiger Befestigungsmittel, z. B. Rillen, hakenähnlichen Vorsprüngen oder konischen Elementen, an der Grundplatte 1 bzw. am Frontteil 7 befestigt. Die Grundplatte 1 und das Frontteil 7 weisen dazu korrespondierende Befestigungsmittel auf. Die Grundplatte 1 weist zusätzliche Befestigungsmittel in der Form von handelsüblichen Distanzmitteln 9 auf, die in ihrem Innern vorzugsweise ein Gewinde aufweisen und zur Befestigung eines Deckels dienen.

Die Bemessungen der Anschlussbox sind nicht willkürlich gewählt. Vielmehr gewährleisten sie, dass die vorgeschriebenen Mindestbiegeradien von Kabeln im Innern der Anschlussbox unter keinen Umständen unterschritten werden müssen. Der Mindestbiegeradius für Klasse E/Kategorie 6 Daten führenden Kupferkabel wie auch Lichtwellenleiterkabel ist bspw. 40 mm. Die Breite b der erfindungsgemässen Anschlussbox liegt somit im hier beschriebenen in einem Bereich von 120 - 250 mm, typischerweise zwischen 150cm und 200 cm, z. B. 184 mm. Die Tiefe t der Anschlussbox weist einen bevorzugten Wert im Bereich von 100 - 220 mm, typischerweise 120 - 180 mm, z. B. 147 mm, auf.

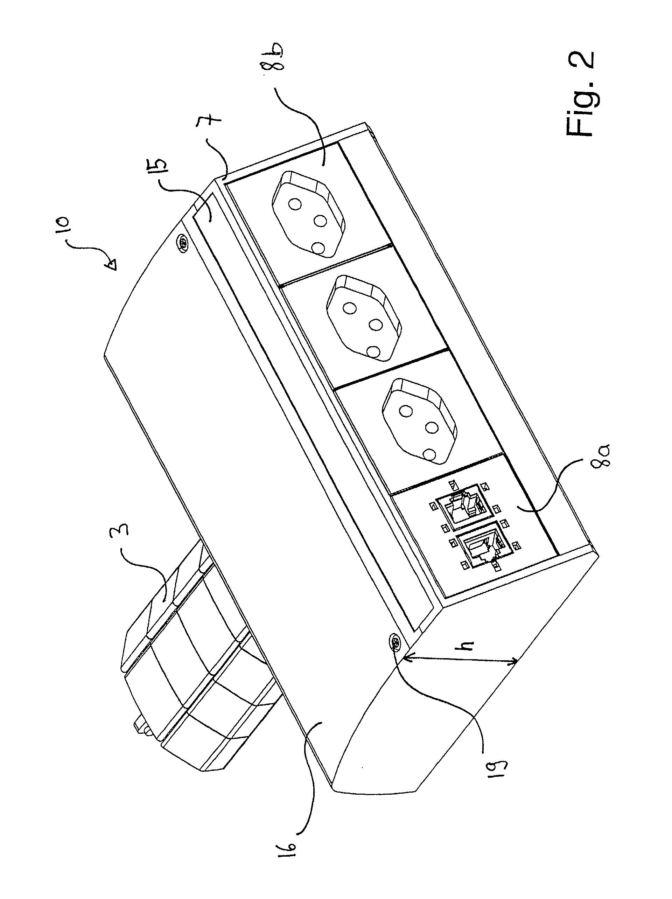

In **Figur 2** ist eine Aussenansicht einer Anschlussbox 10 mit rückseitig angebrachtem Flexkanal 3 zu sehen. In das Frontteil 7 eingebracht sind drei Stromsteckdosen 8b und eine zweifach-Datensteckdose 8a. Auf der Oberseite der Anschlussbox 10, zwischen Deckel 16 und Frontteil 7, befindet sich ein Beschriftungsfeld 15. Der Deckel 16 ist mittels Schrauben 19 befestigt. Durch die Befestigung des Deckels 16 wird vorzugsweise auch das Frontteil 7 fixiert. Das Frontteil 7 ist nicht senkrecht zur Grundplatte 1 angebracht, sondern ist leicht nach hinten geneigt. Der Zugang zu den Steckdosen 8a,b wird dadurch erleichtert. Die Höhe h der Anschlussbox liegt vorzugsweise in einem Bereich von 40 - 100 mm, typischerweise zwischen 50 - 80 mm, z. B. 60 mm.

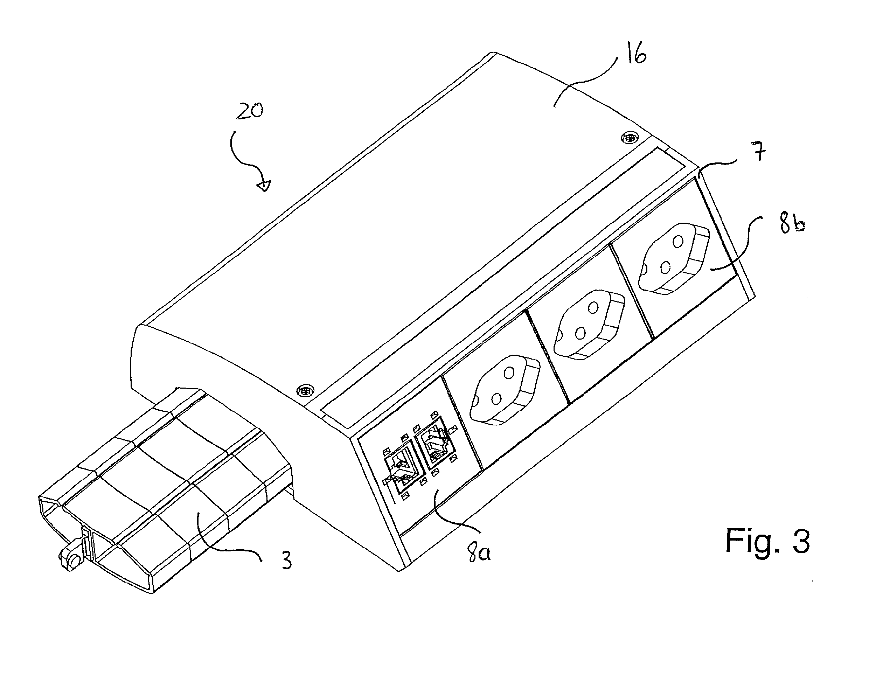

**Figur 3** zeigt eine ähnliche Ausführungsform der Anschlussbox wie Figur 2. Die Anschlussbox 20 weist ebenfalls ein Frontteil 7 mit drei Stromsteckdosen 8b und einer zweifach-Datensteckdose 8a auf. Allerdings befindet sich in dieser Ausführungsform der Flexkanal 3 nicht hinten, sondern seitlich an der Anschlussbox 20. Zum Führen allfälliger Kabel aus der Anschlussbox 20 bzw. für den Kabelkanal, befindet sich in der Seitenwand des Deckels 16 eine Öffnung. Diese wird vorzugsweise durch Ausbrechen eines dazu vorgesehenen Teilstücks der Wand hergestellt.

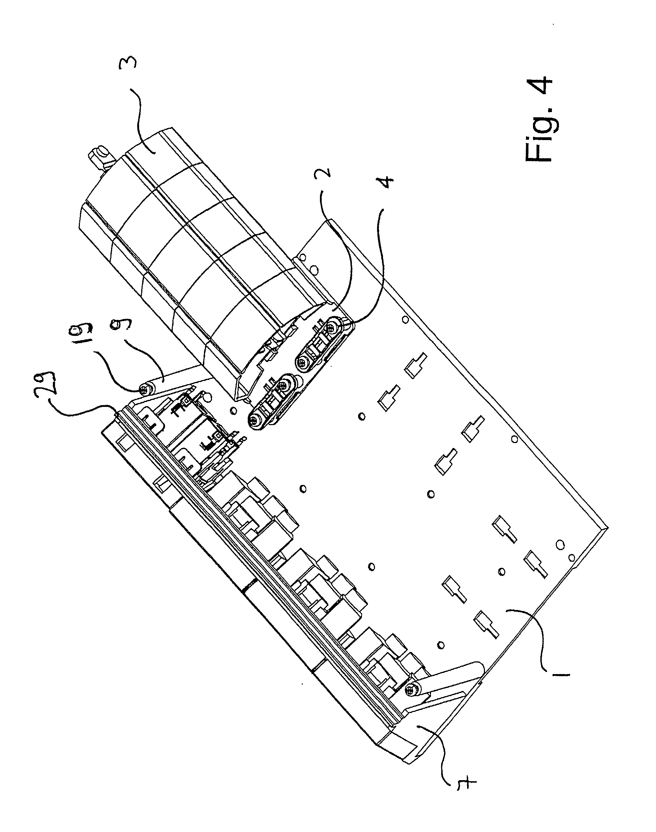

In **Figur 4** ist eine geöffnet gezeichnete Anschlussbox mit seitlich angebrachtem Flexkanal 3 zu sehen. Der Flexkanal 3 befindet sich zusammen mit Zugentlastungen 4 für Kabel auf einem Kabelkanaladapter 2. Dieser ist mit dazu vorgesehenen Befestigungsmitteln in der Grundplatte 1 an ihr befestigt. Zusätzlich auf der Grundplatte 1 befindet sich ein vollständig bestücktes Frontteil 7 und Befestigungsmittel 9, 19 die zum Befestigen eines Deckels vorgesehen sind. Auch das Frontteil 7 weist auf seiner Oberseite Befestigungsmittel 29 auf, mit denen das Frontteil mit dem Deckel verbunden wird.

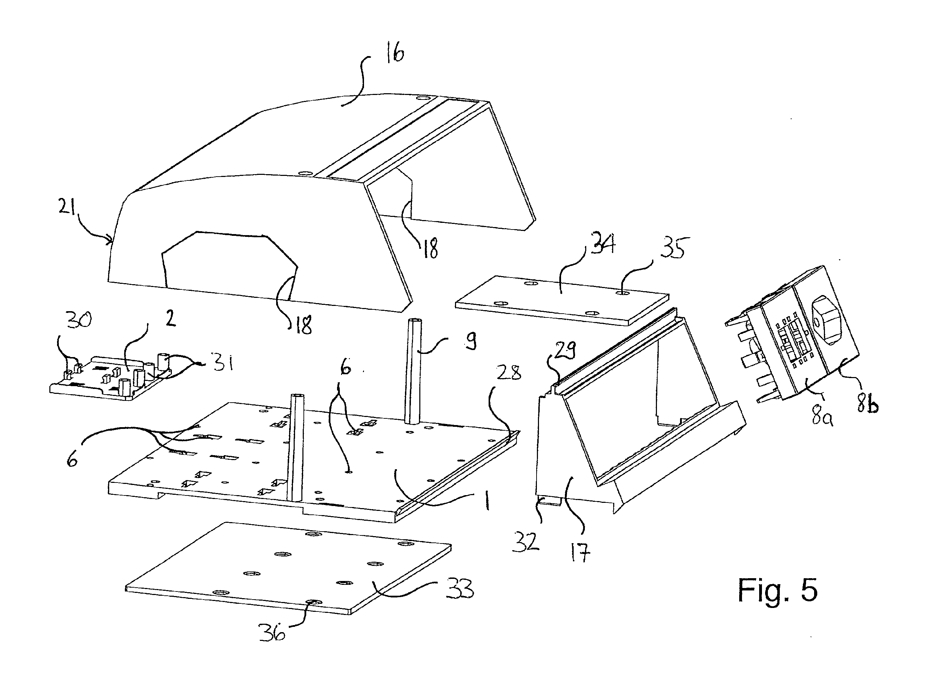

**Figur 5** zeigt die wesentlichen Einzelteile der aufgebauten Anschlussbox. Zu sehen sind eine Grundplatte 1 und ein Kabelkanaladapter 2 mit mehreren Befestigungsmitteln 6, 9, 28, 30, 31, mittels denen weitere Einzelteile an der Grundplatte 1 bzw. am Adapter 2 angebracht werden können. Befestigungsmittel sind bspw. ein Gewinde aufweisende Distanzmittel für Schrauben zum Befestigen von Zugentlastungen oder einem Deckel 16. Es können auch hakenähnliche Ausformungen oder Aussparungen zum Anbringen eines Kabelkanals bzw. zum Befestigen eines Adapters oder zusätzlichen Elementen sein. Der Deckel 16 weist auf beiden Seitenwänden und der integrierten Rückwand 21 Ausschnitte auf, an denen ein Stück Wand herausgetrennt werden kann. Durch die entstandene Öffnung können die Kabel aus einer Anschlussbox herausgeführt werden.

Ein weiteres Einzelteil ist ein Frontteil 7, welches zur Grundplatte 1 und dem Deckel 16 korrespondierende Befestigungsmittel 29, 32 aufweist. In eine Öffnung im Frontteil 7 werden Steckdosen 8a, 8b typischerweise handelsübliche Steckdosen, eingesetzt. Als zusätzliche Einzelteile sind eine Platte als Beschwermittel 33 und eine Verbindungsplatte 34 abgebildet. Beide weisen Befestigungsmittel 35, 36 auf, mittels denen sie an einer bzw. zwei verschiedenen Grundplatten befestigt werden können. Die Verbindungsplatte kann alternativ zur gezeichneten Anordnung bspw. recht massiv ausgebildet sein und gleichzeitig als Beschwermittel dienen.

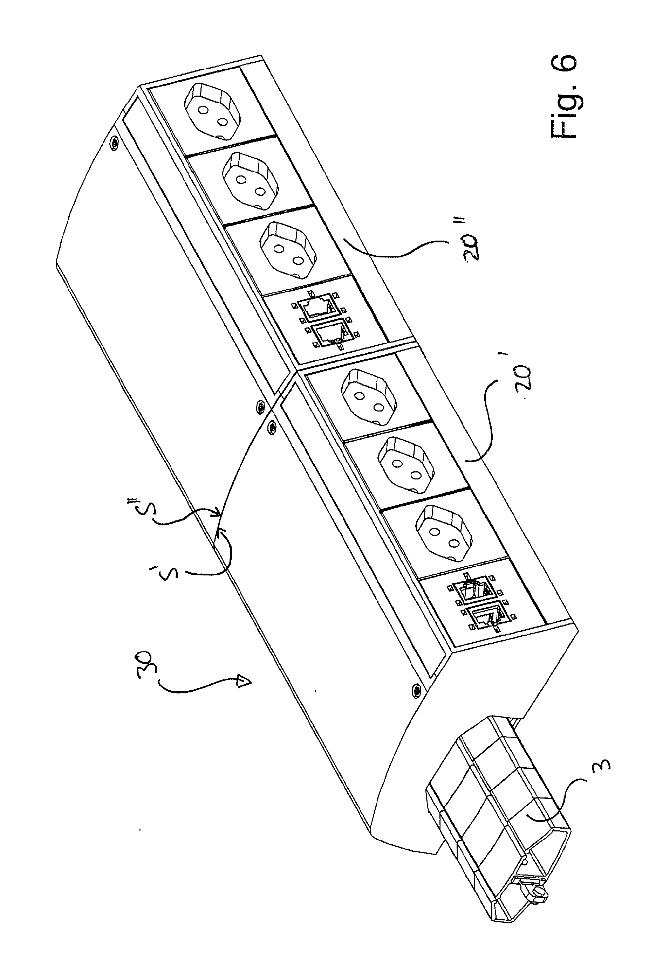

**Figur 6** zeigt eine erweiterte Variante der erfindungsgemässen Anschlussbox. Diese, zu einer erweiterten Einheit 30 zusammengebaute Anschlussbox, beinhaltet im wesentlichen eine Anschlussbox 20', wie sie aus Figur 3 bekannt ist. Auf ihrer, dem Kabelkanal 3 abgewandten Seite S', ist sie mit einer weiteren Anschlussbox 20" verbunden. Diese zweite Anschlussbox 20" weist keinen eigenen Kabelkanal auf. Die Erweiterung der Anschlussbox 20' mit einer weiteren Anschlussbox 20" kann sehr einfach durchgeführt werden. Bei beiden Anschlussboxen 20', 20" wird jeweils eine Seitenwand S', S" weggelassen, bzw. ein Abschnitt der Seitenwand entlang dafür vorgesehenen Stellen 18, wie bspw. in Figur 5 gezeigt, herausgetrennt. Die Anschlussboxen 20', 20" können zusammengeschoben und bspw. mittels geeigneter Verbindungsmittel, z. B. einer Platte oder Steckverbindungen, aneinander befestigt werden. Das Anbringen von Verbindungsmitteln geschieht vorzugsweise mit in der Grundplatte vorhandener Befestigungsmittel. Dies sind bspw. dieselben Befestigungsmittel, die auch für das Anbringen anderer Elemente verwendet werden können, wie vorzugsweise die Befestigungsmittel zum Anbringen des nun nicht benötigten Kabelkanals bzw. dessen Adapters. Durch diese Art der Gestaltung der Anschlussboxen ist zu sehen, dass das Verbinden zu noch grösseren Einheiten mit drei, vier oder mehr Anschlussbboxen im wesentlichen keinen Einschränkungen unterliegt. Durch ein Entfernen der Deckel der einzelnen Anschlussboxen 20', 20" ist weiterhin der komfortable Zugang zur Verdrahtung gewährleistet.

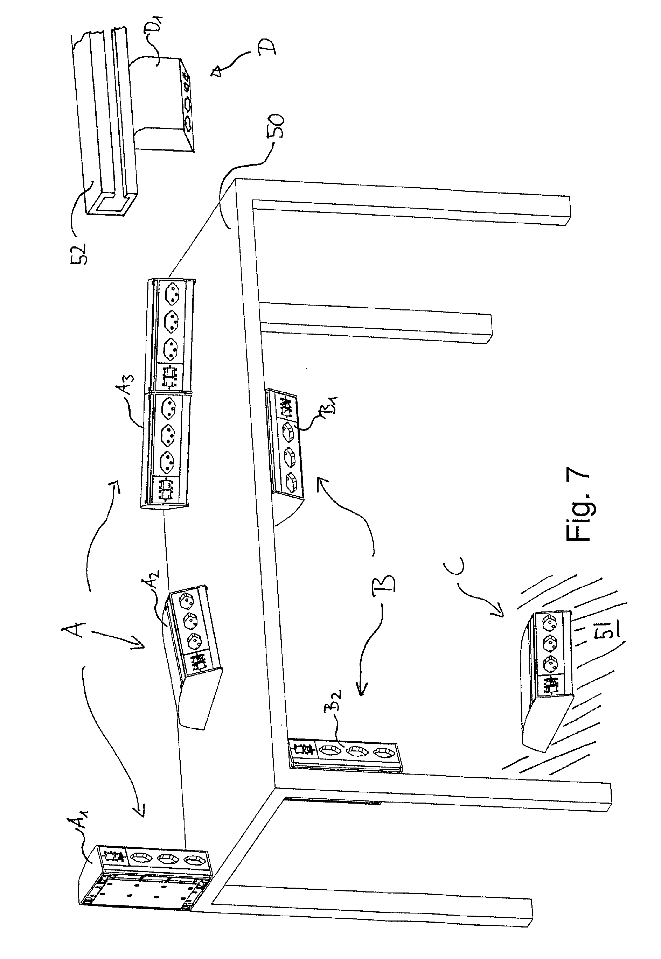

In **Figur 7** sind diverse Anordnungsmöglichkeiten der erfindungsgemässen Anschlussbox zu sehen: auf einer Tischplatte 50 (A), direkt unter der Tischplatte 50 (B), auf dem Boden 51(C) und unter einem Brüstungskanal 52 (D). Dabei sind die Anschlussboxen als Einzeltischmodell A2, als erweiterte Einheit A3, als seitlich aufgestellte Anschlussbox A1, als seitlich an einem Tischbein B2 angebrachte Einheit oder als Wandmodell D1 ausgebildet.

## Patentansprüche

1. Anschlussbox mit einem Kunststoffgehäuse, mit einem Kabeleingang zum Führen von Strom und/oder Daten führenden Kabeln ins Innere der Anschlussbox (10,20) und mit von der Gehäuseaussenseite zugänglichen Steckdosen (8a,8b), deren Anschlüsse mit Adern von ins Inneren geführten Kabeln (5) verbindbar sind, wobei das Kunststoffgehäuse Steckdosen-Befestigungsmittel zum reversiblen Befestigen der Steckdosen (8a,8b) aufweist.

2. Anschlussbox nach Anspruch 1, **dadurch gekennzeichnet, dass** das Gehäuse Befestigungsmittel (6,9) zum Befestigen von Zugentlastungen (4) oder anderen Elementen aufweist.

3. Anschlussbox nach Anspruch 1 oder 2, **dadurch gekennzeichnet, dass** das Gehäuse so ausgestaltet und die Befestigungsmittel (6,9) so angeordnet sind, dass der Kabeleingang im Wesentlichen reversibel relativ zum Gehäuse versetzt werden kann.

4. Anschlussbox nach einem der vorangehenden Ansprüche, **gekennzeichnet durch** einen am Gehäuse fixierbaren Kabelkanaladapter (2) zum Verbinden des Gehäuses mit einem Kabelkanal zum Führen der ins Gehäuseinnere verlaufenden Kabels (5) ausserhalb des Gehäuses.

5. Anschlussbox nach einem der vorangehenden Ansprüche, **dadurch gekennzeichnet, dass** mindestens eine Gehäusewand einen herausnehmbaren, bspw. herausbrechbaren Abschnitt aufweist, welcher als Kabeleingang dienen kann.

6. Anschlussbox nach Anspruch 5, **dadurch gekennzeichnet, dass** der herausnehmbare Abschnitt durch eine Sollbruchstelle vom Rest der Gehäusewand getrennt ist.

7. Anschlussbox nach Anspruch 5 oder 6, **dadurch gekennzeichnet dass** der herausnehmbare Abschnitt oder ein herausnehmbarer, bspw. herausbrechbarer Abschnitt so angeordnet ist, dass die Anschlussbox (20') mit herausgenommenem Abschnitt zusammen mit einer weiteren Anschlussbox (20") mit herausgenommenem Abschnitt zu einer durch im Gehäuseinnern verlaufenden Kabel (5) oder Kabeladern verbundenen erweiterten Einheit (30) zusammengefügt werden kann.

8. Anschlussbox nach Anspruch 7, **dadurch gekennzeichnet, dass** das Gehäuse Befestigungsmittel (6) zum Anbringen einer Verbindungsplatte (34) aufweisen, an welcher auch die weitere Anschlussbox (20") fixierbar ist.

9. Anschlussbox nach einem der vorangehenden Ansprüche, **dadurch gekennzeichnet, dass** eine von einer Frontfläche der Steckdosen definierte Ebene einen spitzen Winkel von zwischen 50° und 80°, bspw. zwischen 60° und 70° mit einer Gehäusewand bildet.

10. Anschlussbox nach einem der vorangehenden Ansprüche, **dadurch gekennzeichnet, dass** das Gehäuse eine Grundplatte (1), ein daran reversibel befestigbares Frontteil (7) und einen abnehmbaren Deckel (16) mit Seitenwänden und einer im Deckel integrierten Rückwand (21) aufweist.

11. Anschlussbox nach Anspruch 10, **dadurch gekennzeichnet, dass** das Frontteil (7) einen Rahmen besitzt, in welchen Normgrösse-Steckdosen eingeschoben oder eingesetzt werden können.

12. Anschlussbox nach Anspruch 10 oder 11, **dadurch gekennzeichnet, dass** mindestens eine Seitenwand rechtwinklig zur Grundplatte liegt.

13. Anschlussbox nach einem der vorangehenden Ansprüche, **dadurch gekennzeichnet, dass** die Innenmasse des Gehäuses so ausgelegt sind, dass Mindestbiegeradien von 40 mm von keinem im Innern verlaufenden Kabel unterschritten werden müssen.
